# EUROPÄISCHE PATENTANMELDUNG

(11) **EP 0 640 821 A2**
(43) Veröffentlichungstag der Anmeldung: **01.03.1995**
(21) Anmeldenummer: 94111224.5
(22) Anmeldetag: 19.07.1994
(51) Int. Cl.: G01M 3/00

(54) **Vorrichtung zur Prüfung von Hohlräumen**

(30) Priorität: 25.08.1993 DE 4328575
(71) Anmelder: Daimler-Benz Aerospace Aktiengesellschaft, D-81663 München (DE)
(72) Erfinder: Ertl, Herbert, D-82335 Berg (DE); Puttinger, Dietmar, D-80539 München (DE)

(57) **Zusammenfassung**

Die Vorrichtung zur Prüfung von Hohlräumen auf Dichtigkeit weist einen im Hohlraum verschiebbaren Prüfkopf auf, der mit einer Vorschubeinrichtung und mindestens zwei im Abstand voneinander angeordneteten Dichtungsanordnungen versehen ist. Zwischen den Dichtungsanordnungen ist mindestens ein Satellitenprüfkopf vorgesehen, der unter einem Winkel zur Längsachse des Prüfkopfes mittels einer eigenen Vorschubeinrichtung verfahrbar ist und der drehbar bezüglich der Längsachse des Prüfkopfes gelagert ist.

## Beschreibung

Die vorliegende Erfindung betrifft eine Vorrichtung zur Prüfung von Hohlräumen wie Kanäle, Rohrleitungen und dgl. auf Dichtigkeit, mit einem im Hohlraum verschiebbaren Prüfkopf, der mit einer Vorschubeinrichtung und mit mindestens zwei im Abstand voneinander angeordneten Dichtungsanordnungen versehen ist, die mit einer Druckfluidquelle verbunden sind und die nach Beaufschlagung mit dem Druckfluid den Hohlraum zwischen sich abdichten und damit eine Prüfstrecke bilden.

Bei Hohlräumen mit engen Querschnitt, wie z. B. Abwasserkanälen, Trinkwasserleitungen, Pipelines und ähnlichem, sind regelmäßige Überprüfungen erforderlich, um Erosions- und Korrosionsschäden rechtzeitig zu entdecken, so daß Leckagen aufgrund von Undichtigkeiten bzw. Brüchen und die damit verbundenen Umweltbeeinträchtigungen und Fluidverluste rechtzeitig verhindert werden.

Aus der älteren Anmeldung P 42 20 900 der Anmelderin ist eine Vorrichtung zur Prüfung von Hohlräumen bekannt, die einen Prüfkopf und eine mit dem Prüfkopf verbundene Vorschubeinrichtung aufweist, um den Prüfkopf in den zu inspizierenden Hohlräumen zu verschieben, wobei die Vorschubeinrichtung aus einem biegeflexiblen schubsteifen Hohlkörper in Form eines armierten Schlauches oder eines Gliederhohlkörpers besteht, während der Prüfkopf mit einer Vielzahl von Meßgeräten versehen ist und jedes Meßgerät im Prüfkopf über eine Stromversorgungsleitung und eine Datenleitung, die innerhalb der Vorschubeinrichtungen verlaufen, mit einer zentralen Stromversorgung und einer Auswerteeinheit, beispielsweise auf einem Fahrzeug, verbunden ist. Die Vorschubeinrichtung wird dabei auf eine Aufwickelhaspel aufgerollt, die auf der Ladefläche des Fahrzeugs angeordnet ist, auf dem ebenfalls die zentrale Stromversorgung, die Druckversorgung und die Auswerteeinheit für die vom Prüfkopf gelieferten Daten angeordnet ist.

Nach dem Einführen in die auf Dichtigkeit zu überprüfende Rohrleitung wird der Prüfkopf um eine bestimmte Strecke vorgeschoben, wonach die den Prüfkopf konzentrisch umgebende Dichtungsanordnung z. B. in Form einer elastischen Dichtmanschette mit dem Druckfluid beaufschlagt, d. h. aufgeblasen wird, bis sie an der Innenwand der zu überprüfenden Rohrleitung anliegt. Nun kann die Rohrleitung mit einem zweiten Druckfluid, z. B. Wasser oder Druckluft beaufschlagt werden, um so den Abschnitt zwischen der Einführstelle des Prüfkopfes und dem Dichtkopf selbst auf Dichtigkeit zu überprüfen.

Um die Prüfstrecken bei längeren Rohrleitungen nicht zu lang werden zu lassen, ist auch bereits vorgeschlagen worden, den Prüfkopf in zwei relativ zueinander verfahrbare Prüfkopfabschnitte zu unterteilen, von denen jeder mit einer eigenen Dichtungsanordnung versehen ist. Die zwischen den beiden Dichtungsabschnitten befindliche Rohrleitungsstrecke wird dann jeweils nach Beaufschlagung der Dichtungsanordnung der einzelnen Prüfkopfabschnitte auf Dichtigkeit bzw. Korrosion untersucht.

Eine derartige Überprüfung einer Rohrleitung ist ohne weiteres schnell und preisgünstig möglich, wenn keine Abzweigungen in der Prüfstrecke vorhanden sind, beispielsweise Zuleitungskanäle aus Hausanschlüssen oder Straßengullys bzw. Abzweigungen bei Trinkwasserleitungen. Es ist klar, daß dann kein konstanter Druck in der Prüfstrecke aufgebaut werden kann, wenn nicht zuvor die Abzweigung druckdicht verschlossen wird. Da dieses Verschließen der Abzweigung üblicherweise nur an dem der Verbindungsstelle mit der zu überprüfenden Rohrleitung entgegengesetzten Ende erfolgen kann, da allein dieses Ende zugänglich ist, kann bei der Dichtigkeitsprüfung der Rohrleitung nicht ohne weiteres festgestellt werden, ob eine undichte Stelle in der Rohrleitung selbst oder in der Zuleitung zwischen ihrer Anschlußstelle an die Rohrleitung und ihrer Verschlußstelle vorhanden ist.

Aufgabe der vorliegenden Erfindung ist es, eine Vorrichtung zu schaffen, mit der eine derartige Feststellung schnell und problemlos möglich ist.

Ausgehend von der eingangs näher genannten Vorrichtung zur Prüfung von Hohlräumen auf Dichtigkeit wird zur Lösung dieser Aufgabe vorgeschlagen, daß zwischen den Dichtungsanordnungen des Prüfkopfes wenigstens ein Satellitenprüfkopf vorgesehen ist, der unter einem Winkel zur Längsachse des Prüfkopfes mittels einer eigenen Vorschubeinrichtung verfahrbar ist und der mit mindestens einer Dichtungsanordnung versehen ist.

Der Satellitenprüfkopf ist vorteilhafterweise im Ruhezustand im Inneren des Prüfkopfes in einer Schleuse gelagert, die um einen Schwenkzapfen verdrehbar ist, der sich senkrecht zur Längsachse des Prüfkopfes erstreckt.

Bei einem ersten vorteilhaften Ausführungsbeispiel ist die Schleuse um die Längsachse des Prüfkopfes drehbar gelagert; bei einem zweiten vorteilhaften Ausführungsbeispiel ist der Prüfkopf mit einer Vorrichtung versehen, die seine Verdrehung um die Längsachse ermöglicht; diese Vorrichtung kann aus mehreren entlang des Außenumfangs des Prüfkopfes vorgesehenen Laufrädern bestehen, deren Laufrichtung senkrecht zur Vorschubrichtung des Prüfkopfes verläuft.

Die erfindungsgemäße Ausgestaltung der Vorrichtung zur Überprüfung von Hohlräumen wie Kanälen, Rohrleitungen und dgl. auf Dichtigkeit ermöglicht es, durch Vorschub des Satellitenprüfkopfes in eine seitliche Abzweigung der eigentlichen zu untersuchenden Rohrleitung und Abdichten der Abzweigung unmittelbar an der Verbindungsstelle mit der Rohrleitung festzustellen, ob die Prüfstrecke zwischen den beiden Dichtungsanordnungen des Prüfkopfes eine undichte Stelle aufweist oder nicht. Sofern in der Prüfstrecke der Rohrleitung keine Undichtigkeit festgestellt wird, jedoch nach Entfernen des Satellitenprüfgerätes aus der Abzweigung und Verschließen des zugänglichen Endes der Abzweigung eine Undichtigkeit durch die Meßgeräte festgestellt wird, ist offensichtlich, daß die undichte Stelle in der Abzweigung selbst zu suchen ist.

Neben der Prüfung auf Dichtigkeit kann auch eine Sichtprüfung über mitgeführte Fernsehkameras sowohl im Prüfkopf als auch im Satellitenprüfkopf erfolgen; bei entsprechend ausgeführter langer Vorschubeinrichtung für das Satellitenprüfgerät kann dieses über die gesamte Länge der Abzweigung verfahren werden.

Mit einer schwenkbaren Schleuse kann dabei der Satellitenprüfkopf in Achsrichtung zur Abzweigung justiert werden, wobei die Positionierung der Schleuse z. B. über kleine Fernsehkameras gesteuert wird. Die Fortbewegung des Satellitenprüfkopfes erfolgt dabei über bekannte Systeme, wie z. B. elektrisch, pneumatisch oder hydraulisch angetriebene Räder oder über ein Schrittfahrwerk oder über andere Vorschubeinrichtungen, wie z. B. armierte Schläuche.

Im folgenden wird die Erfindung an Hand der Zeichnung näher erläutert, in der ein vorteilhaftes Ausführungsbeispiel dargestellt ist. Es zeigen:
Fig. 1 einen Querschnitt durch die erfindungsgemäße Vorrichtung in einer zu überprüfenden Rohrleitung samt Abzweigung und
Fig. 2 eine vergrößerte Darstellung der Lagerung des Satellitenprüfkopfes in einer Schleuse.

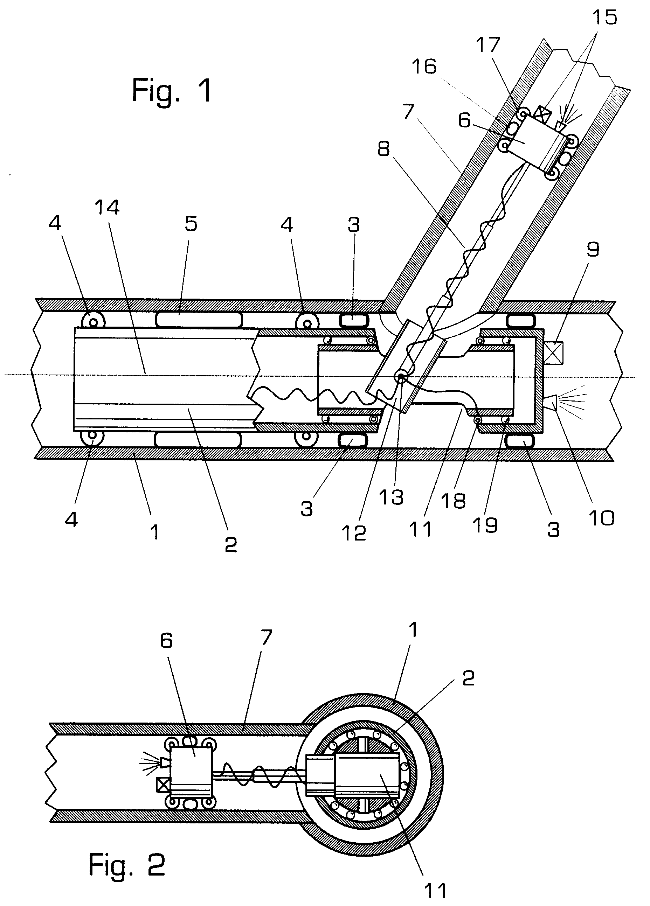

In Fig. 1 ist mit 1 eine zu überprüfende Rohrleitung, beispielsweise ein Abwasserkanal, bezeichnet mit einer unter einem Winkel zu dessen Längsachse verlaufenden Abzweigung 7. In der Rohrleitung 1 ist ein Prüfkopf 2 vorgeschoben, der in üblicher Weise mit einem Laufwerk 4 versehen ist, daß sich auf der Innenwand der Rohrleitung 1 abstützt. Mit 5 sind Bremsklötze bezeichnet zur Feststellung des Prüfkopfes 2, mit 9 eine übliche Kamera, mit 10 eine übliche Beleuchtung und mit 3 Dichtungen in Form von zwei im Abstand voneinander angeordneten aufblasbaren Dichtmanschetten, die zwischen sich eine Prüfstrecke bilden. An Stelle des dargestellten langgestreckten Prüfkopfes 2 kann auch ein Prüfkopf verwendet werden, der aus zwei relativ zueinander verfahrbaren Prüfabschnitten besteht, deren jeder mit einer eigenen Dichtungsanordnung versehen ist, um so eine Prüfstrecke zu bilden, die größer ist als die Länge des Prüfkopfes 2.

Erfindungsgemäß ist nunmehr im Prüfkopf 2 ein Satellitenprüfkopf 6 vorgesehen, der in einer Schleuse 11 gelagert ist und unter einem Winkel zur Längsachse 14 des Prüfkopfes 2 verfahrbar ist. Der Satellitenprüfkopf 6 ist mit einer eigenen Vorschubeinrichtung versehen, die mit dem Prüfkopf 2 verbunden ist sowie mit einer Versorgungsleitung 8 für die am Satellitenprüfkopf 6 vorgesehenen herkömmlichen Untersuchungsgeräte 15, z. B. eine Fernsehkamera mit zugehöriger Beleuchtung. Ferner weist der Satellitenprüfkopf 6 eine eigene Dichtungsanordnung 16 auf sowie Laufräder 17, die in herkömmlicher Weise über die Versorgungsleitung 8 angesteuert werden.

Im Ruhezustand ist der Satellitenprüfkopf 6 im Inneren des Prüfkopfes 2 in der Schleuse 11 gelagert, von der wenigstens ein Schleusenteil 12 um einen Schwenkzapfen 18 verdrehbar ist, der sich senkrecht zur Längsachse 14 des Prüfkopfes 2 erstreckt. Zur exakten Positionierung des Satellitenprüfkopfes 6 vor dessen Einführen in die Abzweigung 7 kann die Schleuse 11 oder das schwenkbare Schleusenteil 12 über eine Drehlagerung 19 um die Längsachse 14 drehbar im Prüfkopf 2 gelagert sein. An Stelle einer Drehlagerung der Schleuse 11 oder des Schleusenteils 12 kann auch der Prüfkopf 2 selbst um seine Längsachse 14 drehbar in der Rohrleitung 1 angeordnet sein, beispielsweise mittels mehrerer entlang des Außenumfangs des Prüfkopfes 2 angeordneter (nicht dargestellter) Laufräder, deren Laufrichtung senkrecht zur Vorschubrichtung und damit senkrecht zur Längsachse 14 des Prüfkopfes 2 ist.

Fig. 2 läßt deutlich erkennen, daß bei geeigneter Verdrehung entweder der Schleuse 11 oder des Schleusenteils 12 oder aber des Prüfkopfes 2 der Satellitenprüfkopf 6 die korrekte Lage bezüglich der Abzweigung 7 eingenommen hat und in diese eingefahren werden kann. Mit den mitgeführten Untersuchungsgeräten 15, z. B. Fernsehkamera mit zugehöriger Beleuchtung, kann zum einen eine Sichtprüfung in Abzweigung 7 vorgenommen werden und mit der mitgeführten Dichtungsanordnung 16 kann nach entsprechender Druckbeaufschlagung mit der Druckfluidquelle die Prüfstrecke zwischen dem festgestellten Prüfkopf 2 und dem festgestellten Satellitenprüfkopf 6 auf Dichtigkeit überprüft werden. Es ist klar, daß der Prüfkopf 2 derart zu positionieren ist, daß seine beiden Dichtungsanordnungen 3 beidseits der Anschlußstelle der Abzweigung 7 festgestellt werden, d. h. mit dem Druckfluid beaufschlagt werden, um die Prüfstrecke zwischen dem Prüfkopf 2 und dem Satellitenprüfkopf 6 auf Dichtigkeit überprüfen zu können.

Es ist ferner auch möglich, sowohl den Prüfkopf 2 als auch die Schleuse 11 und das Schleusenteil 12 jeweils in einem beschränkten Maße drehbar zu lagern, so daß sie sich gegenseitig bei der Drehbewegung und damit Positionierung des Satellitenprüfkopfes 6 bezüglich der Abzweigung 7 unterstützen.

## Patentansprüche

1. Vorrichtung zur Prüfung von Hohlräumen wie Kanälen, Rohrleitung und dgl. auf Dichtigkeit mit einem im Hohlraum verschiebbaren Prüfkopf, der mit einer Vorschubeinrichtung und mit mindestens zwei im Abstand voneinander angeordneten Dichtungsanordnungen versehen ist, die mit einer Druckfluidquelle verbunden sind und die nach Beaufschlagung mit dem Druckfluid den Hohlraum zwischen sich abdichten und damit eine Prüfstrecke bilden, dadurch gekennzeichnet, daß zwischen den Dichtungsanordnungen mindestens ein Satellitenprüfkopf vorgesehen ist, der unter einem Winkel zur Längsachse des Prüfkopfes mittels einer eigenen Vorschubeinrichtung verfahrbar ist und der mit mindestens einer Dichtungsanordnung versehen ist.

2. Vorrichtung nach Anspruch 1, dadurch gekennzeichnet, daß der Satellitenprüfkopf im Ruhezustand im Inneren des Prüfkopfes in einer Schleuse gelagert ist, die um einen Schwenkzapfen verdrehbar ist, der sich senkrecht zur Längsachse des Prüfkopfes erstreckt.

3. Vorrichtung nach einem der vorhergehenden Ansprüche, dadurch gekennzeichnet, daß die Schleuse um die Längsachse des Prüfkopfes drehbar gelagert ist.

4. Vorrichtung nach einem der vorhergehenden Ansprüche, dadurch gekennzeichnet, daß die Schleuse ein Schleusenteil aufweist, daß um die Längsachse des Prüfkopfes drehbar gelagert ist.

5. Vorrichtung nach einem der vorhergehenden Ansprüche, dadurch gekennzeichnet, daß der Prüfkopf mit einer Drehvorrichtung versehen ist, die seine Verdrehung um die Längsachse ermöglicht.

6. Vorrichtung nach Anspruch 5, dadurch gekennzeichnet, daß die Drehvorrichtung aus mehreren entlang des Außenumfanges des Prüfkopfes angeordneten Laufrädern besteht, deren Laufrichtung senkrecht zur Vorschubrichtung des Prüfkopfes ist.
